# EUROPÄISCHE PATENTSCHRIFT

(11) **EP 2 663 467 B1**
(45) Veröffentlichungstag und Bekanntmachung des Hinweises auf die Patenterteilung: **23.05.2018**
(21) Anmeldenummer: 11791575.1
(22) Anmeldetag: 07.12.2011
(51) Int. Cl.: B60L 11/18

(54) **SYSTEM ZUR ZUGRIFFSKONTROLLE AUF EINE FAHRZEUGLADEEINRICHTUNG**
SYSTEM FOR CONTROLLING THE ACCESS TO A VEHICLE CHARGING DEVICE
SYSTÈME DE CONTRÔLE D'ACCÈS À UN DISPOSITIF DE CHARGE DE VÉHICULE

(30) Priorität: 11.01.2011 DE 102011000094
(43) Veröffentlichungstag der Anmeldung: 20.11.2013
(73) Patentinhaber: Huf Hülsbeck & Fürst GmbH & Co. KG, 42551 Velbert (DE)
(72) Erfinder: MÖNIG, Stefan, 58332 Schwelm (DE); GORENZWEIG, Igor, 42109 Wuppertal (DE)
(74) Vertreter: Zenz Patentanwälte Partnerschaft mbB
(86) Internationale Anmeldenummer: PCT/EP2011/072098
(87) Internationale Veröffentlichungsnummer: WO 2012/095225

(56) Entgegenhaltungen:
- WO-A1-2010/115927
- CA-A1- 2 648 972
- GB-A- 2 462 677

## Beschreibung

Die Erfindung betrifft ein System zur Zugriffskontrolle auf eine Ladeeinrichtung für Fahrzeuge. Die Ladeeinrichtung kann an einem Fahrzeug mit elektrischem Antrieb angeordnet sein oder an einer ortsfesten Ladestation. Insbesondere betrifft die Erfindung ein System zur Zugriffskontrolle auf eine Ladesteckdose an einem Kraftfahrzeug oder einer ortsfesten Ladestation oder einen in die Ladesteckdose eingesteckten Ladestecker, wobei die Ladesteckdose mit einer verriegelbaren Abdeckung versehen ist.

Verriegelungsvorrichtungen zur Absicherung eines Tankeinfüllstutzens bei mit Flüssigtreibstoff betriebenen Kraftfahrzeugen sind aus der Technik bekannt. Sie dienen insbesondere dazu, bei abgestellten Fahrzeugen den Tankinhalt gegen Zugriff oder Manipulation durch Unberechtigte zu schützen.

Die DE 35 04 466 beschreibt beispielsweise eine fernbetätigbare Ver- und Entriegelungsanordnung für Tankklappen für Flüssigtanks an Kraftfahrzeugen. Bei dieser Einrichtung wird ein Verriegelungsstift mittels eines Stellgliedes zwischen einer Sperrstellung und einer Freigabestellung bewegt.

Bei batteriebetriebenen oder batteriegestützten Elektro- bzw. Hybridfahrzeugen wird zur Aufladung der Antriebsbatterie eine Ladesteckdose am Fahrzeug bereitgestellt, in die ein passender Ladestecker einführbar ist. Dieser Ladestecker ist über ein Ladekabel mit einer Stromquelle, z.B. einer privaten Steckdose oder einer Ladestation im öffentlichen Bereich verbunden. Die DE 196 13 793 beschreibt eine geeignete Batterieladevorrichtung zum Aufladen einer Batterie in einem Kraftfahrzeug mit einer entsprechenden mehrpoligen Steckvorrichtung. Je nach Anwendung können Ladestecker in unterschiedlicher Größe und Gestaltung zum Einsatz kommen, insbesondere davon abhängig, ob die zum Einsatz kommende Stromquelle Gleichstrom oder Wechselstrom bereitstellt.

Zur Verbindung des Ladesteckers mit einer Ladesteckdose im Kraftfahrzeug existieren verschiedene Mechanismen. Bei einigen Ladesteckern muss der Ladestecker zunächst in eine zugehörige Öffnung eingeführt werden und dann um eine Drehachse geschwenkt werden, bei anderen Verbindungsmitteln muss der Stecker mit erhöhtem Kraftaufwand in zugehörige Rastmittel oder Federkontakte gebracht werden. Auch ein motorisch unterstützter Einzug des Steckers in die Ladesteckdose ist möglich.

Es ist üblich, dass zur Absicherung einer Ladesteckdose, ähnlich wie bei einer Tankklappe bei herkömmlichen Kraftfahrzeugen, ein Deckel oder eine Abdeckung für die Ladesteckdose vorgesehen ist, welcher auch gegen Manipulation und unberechtigtem Zugriff verriegelbar ist.

Die DE 196 42 687 beschreibt diesbezüglich eine Abdeckung für Ladesteckdosen, welche gleichzeitig eine Verriegelung eines eingesteckten Ladesteckers erlaubt.

Eine weitere Lösung ist als Ladekabelverriegelungsvorrichtung der Druckschrift WO 2010/115927 A1 zu entnehmen, welche als nächstliegender Stand der Technik angesehen wird und die Merkmale der Präambel des unabhängigen Anspruchs 1 offenbart. Die bekannten Systeme sind ihrem Komfort und der Benutzungssicherheit jedoch eingeschränkt.

Aufgabe der Erfindung ist es daher, Sicherheit und Komfort für einen Ladevorgang mittels Ladesteckdose an einem Kraftfahrzeug zu verbessern.

Diese Aufgabe wird erfindungsgemäß gelöst durch ein System mit den Merkmalen des Patentanspruchs 1 sowie zugehörige Verfahren mit den Merkmalen der Patentansprüche 9 oder 10.

Erfindungsgemäß ist bei dem System zur Zugriffkontrolle auf eine Ladesteckdose ein Annäherungssensor im Bereich der Ladesteckdose angeordnet. Dieser Annäherungssensor kann die Annäherung eines Körpers erfassen, insbesondere eines Körperteils von einem Bediener, welcher sich der Ladesteckdose annähert, z.B. indem er seine Hand zur Ladesteckdose ausstreckt.

Beliebige Gestaltungen eines Annäherungssensors sind möglich (s.u.). Ladesteckdose und Sensor können an einem Fahrzeug oder auch an einer Ladestation oder Versorgungsstation angeordnet sein. Es kann entsprechend der Zugang sowohl an der Einspeisungsseite als auch auf der Abnahmeseite durch die Erfindung gesichert sein oder an einer der beiden Seiten.

Räumlich ist der Annäherungssensor im Bereich der Ladesteckdose angeordnet, so dass er den Zugriff eines Benutzers in diesen Bereich detektieren kann. Dafür kann der Annäherungssensor benachbart zu der Steckeraufnahme oder unmittelbar an dieser Steckeraufnahme angeordnet sein. Ebenso kann der Annäherungssensor im Bereich von umliegenden Bauteilen angeordnet sein, welche eine Detektion nahe der Ladesteckdose erlauben, z.B. unter Kunststoffteilen in diesem Bereich.

Der Annäherungssensor ist mit einem fahrzeugseitigen bzw. ladestationsseitigen Steuersystem gekoppelt, wobei mit dem Steuersystem außerdem wenigstens eine Sendespule für elektromagnetische Wecksignale gekoppelt ist. Das Steuersystem kann die Sendespule ansteuern, um über die Sendespule ein Wecksignal auszusenden, wenn der Annäherungssensor die Annäherung eines Körpers im Bereich der Ladesteckdose erfasst.

Derartige Erfassungsmechanismen und auch die Aussendung von Wecksignalen sind aus anderen Bereichen der Kraftfahrzeugtechnik bekannt. Beispielsweise hält die Anmelderin selbst zahlreiche Entwicklungen und Anmeldungen im Bereich der Sensierung von Bedienwünschen an Kraftfahrzeugtürgriffen mit Hilfe von Annäherungssensoren (siehe z.B. DE 103 25 246). Grundsätzlich ist die dort eingesetzte Technik auf diese Entwicklung übertragbar und bezüglich der technischen Details wird auf diese Kenntnisse und die Offenbarung der genannten Druckschrift verwiesen.

Die Sendespule sendet das Wecksignal aus, welches von einem ID-Geber empfangbar ist, der von einem Benutzer des Kraftfahrzeuges oder der Ladestation mitzuführen ist. Der ID-Geber weist dafür entsprechende Empfangseinrichtungen, z.B. Transponderspulen auf. Entsprechende ID-Geber sind aus den Bereichen der Keyless-Konzepte von Kraftfahrzeugen bekannt. Außerdem verfügt der ID-Geber über Mittel zur Kommunikation mit dem fahrzeugseitigen bzw. ladestationsseitigen Steuersystem, das ebenfalls Mittel zum Ausführen einer bidirektionalen Funkkommunikation mit dem ID-Geber aufweist. Die bidirektionale Funkkommunikation wird üblicherweise nicht auf derselben Trägerfrequenz ausgeführt, wie das Wecksignal an den ID-Geber ausgesandt wird. Außerdem werden dafür auch andere Sende-Empfangseinrichtungen auf Fahrzeugseite eingesetzt. Nach einer erfolgreichen Authentifizierung des ID-Gebers in der bidirektionalen Funkkommunikation, gibt das Steuersystem die Abdeckung des Ladesteckers frei oder verriegelt diese, falls die Authentifizierung nicht erfolgreich war. In der bidirektionalen Funkkommunikation werden Informationen vom ID-Geber an das fahrzeugseitige Steuersystem übermittelt, welches daraufhin die Berechtigung des ID-Gebers zum Zugriff auf die Ladesteckdose überprüft.

Wesentlich für die Erfindung ist daher, dass für einen Zugriff auf die Ladesteckdose eine Authentifizierung über einen mitgeführten ID-Geber erfolgt. Auf diese Weise kann z.B. die Zugriffsregelung für eine Ladesteckdose getrennt von der Zugriffsberechtigung auf andere Kraftfahrzeugfunktionen oder Funktionen der Ladestation bewertet werden. So kann beispielsweise der Zugriff auf die Ladeeinrichtung des Kraftfahrzeuges gesperrt bleiben, wenn kein berechtigter ID-Geber ermittelt wird, obwohl das Fahrzeug (z.B. Türen) dennoch entriegelt sein kann. Ein entriegeltes Fahrzeug kann in diesem Zusammenhang für die Be- und Entladung zugänglich sein, aus Sicherheitsgründen ist der Verschluss des Ladesteckers dennoch verriegelt. Andererseits, wird das Fahrzeug beispielsweise in einer privaten Garage oder öffentlichen Garage abgestellt, kann das Fahrzeug verriegelt sein oder bleiben, und für den Zugriff auf die Ladesteckdose wird der erfindungsgemäße Authentifizierungsdialog vorgenommen der jedoch nur zu einer Entriegelung der Ladesteckdosenabdeckung führt, das übrige Fahrzeug jedoch verriegelt lassen kann.

Entsprechendes gilt beim Einsatz der Erfindung für ortsfeste Ladestationen. Zur Benutzung legitimierte ID-Geber werden an berechtigte Personen ausgegeben oder es werden vorhandene (z.B. Fahrzeugen zugeordnete ID-Geber) bei der Ladestation registriert. Der Zugriff auf die Ladeversorgung wird nur freigegeben, wenn eine erfolgreiche Überprüfung des angenäherten ID-Gebers stattgefunden hat. Beispielsweise können diese Funktionen bei Campingplätzen mit Ladestationen oder bei Mietwagenanbietern eingesetzt werden.

Die erfindungsgemäße Einrichtung und das zugehörige Verfahren erhöhen die Sicherheit beim Zugriff auf Aufladeeinrichtungen an Kraftfahrzeugen und Ladestationen. Die Überprüfung der Berechtigung zum Zugriff auf eine Ladeeinrichtung an dem Kraftfahrzeug ermöglicht neuartige Zugriffskonzepte mit erhöhter Sicherheit. Beispielsweise braucht nicht jeder Führer des Kraftfahrzeuges die Berechtigung zum Zugriff auf die Ladeeinrichtung zu haben, andererseits kann der Zugriff auf die Ladeeinrichtung eines Kraftfahrzeuges auch Personen gewährt werden, welche keinen Zugriff auf den übrigen Fahrgastraum haben oder nicht zum Start des Fahrzeuges berechtigt sind. Der ID-Geber braucht dabei nicht unbedingt ein dem Fahrzeug speziell zugeordneter ID-Geber sein, auch wenn dies häufig der Fall sein wird. Beispielsweise könnten standardisierte ID-Geber an qualifizierte Personen ausgegeben werden, welche dann zum Zugriff auf die Tankeinrichtung an entsprechend vorbereiteten Fahrzeugen, nicht jedoch auf den übrigen Teil des Fahrzeuges berechtigt sind. In diesem Fall würde in dem Authentifizierungsdialog zwischen fahrzeugseitiger Steuereinrichtung und ID-Geber festgestellt, dass es sich um einen ID-Geber mit begrenzter Berechtigung handelt und entsprechend nur die Freigabe des Zugriffs auf die Ladeklappe oder den Ladestecker erlaubt. So kann beispielsweise in Parkhäusern als Service eine Aufladung der Elektrofahrzeuge durch Servicekräfte erfolgen, die jedoch zu keinem Zeitpunkt den Zugriff auf die Fahrzeuginnenräume erhalten, sondern nur auf die Ladeeinrichtung.

Entsprechendes gilt für die Zugriffsregelung für Ladestationen. Beispielsweise können aus einer Gruppe von Ladestationen Untergruppen für Benutzer gebildet werden, so dass einige Nutzer Zugriff auf einen Teil und andere auf einen anderen Teil von Ladestationen haben. Es können Benutzern auch Rechte zum Zugriff auf alle Stationen eingeräumt werden (Premium Nutzer) während andere nur auf einen Teil der Staionen Zugriff haben. Schließlich kann auch, bei Verwendung von technisch unterschiedlichen Ladestationen, nur der Zugriff auf solche Stationen gewährt werden, welche nach Prüfung des ID-Gebers als kompatibel erkannt werden (z.B. bei fahrzeugspezifischen ID-Gebern).

Die Authentifizierung des Zugriffs erfolgt in Abhängigkeit von einer tatsächlichen Annäherung eines Bedieners an die Ladesteckdose. Erfindungsgemäß braucht daher die Ladesteckdose bei einem Standard-Entriegelungsvorgang des Fahrzeuges gar nicht mitentriegelt werden, sondern wird erst bei einem tatsächlichen Zugriff auf die Steckdose entriegelt. Dies ist möglich, weil erst der Annäherungssensor im Bereich der Ladesteckdose überhaupt eine Abfrage und mögliche Entriegelung der Ladesteckdose triggert. Andererseits kann ein berechtigter Benutzer mit einem passenden ID-Geber auf die Ladesteckdose zugreifen, indem er sich an dieser annähert und der Authentifizierungsdialog erfolgreich ausgeführt wird. Dazu braucht jedoch nicht das gesamte Fahrzeug entriegelt zu werden.

Es ist besonders vorteilhaft, wenn sich die Sendespule für Wecksignale im Bereich der Ladesteckdose selbst befindet, besonders bevorzugt in oder an der Abdeckung der Ladesteckdose. Die Anordnung der Sendespulen nahe der Ladesteckdose selbst ermöglicht eine räumlich begrenzte und exakt platzierte Aussendung des Wecksignals. Dieses Wecksignal kann dann in seiner Stärke und Reichweite so beschränkt werden, dass nur in einem äußerst beschränkten Raumbereich um die Ladesteckdose ein detektierbares Wecksignal für mitgeführte ID-Geber vorliegt. Beispielsweise kann die detektierbare Reichweite des Wecksignals auf einen Umkreis von einem Meter um die Ladesteckdose begrenzt werden, so dass nur für den Fall, dass tatsächlich der Benutzer und Träger des ID-Gebers auf die Steckdose zugreift, ein Authentifizierungsprotokoll ausführt.

Die zugehörige Sendespule kann um die Ladesteckdose herum angeordnet sein oder beispielsweise in den Abdeckungsbauteil für die Ladesteckdose. Geeignete Anordnungen und Gestaltungen für derartige Sendespulen sind wiederum aus dem Bereich der Zugriffskontrollsysteme bei Türgriffen von Kraftfahrzeugen bekannt.

In einer Weiterbildung der Erfindung weist der ID-Geber Mittel zur Signalstärkebestimmung von empfangenen Signalen der Sendespule für Wecksignale auf, wobei der ID-Geber zur Übermittlung der bestimmten Signalstärken in der bidirektionalen Funkkommunikation an das Steuersystem ausgebildet ist.

Die Ermittlung von Signalstärken des Wecksignals im ID-Geber erlaubt eine fahrzeugseitige Erfassung des Abstandes des ID-Gebers vom Fahrzeug, was die Sicherheit für den Zugriff auf die Ladesteckdosenabdeckung weiter erhöht. Nur wenn der Abstand des ID-Gebers gemäß den ermittelten Signalstärken in einem definierten Annäherungsbereich liegt, wird der Zugriff auf die Abdeckung der Ladesteckdose gewährt.

Zu diesem Zweck können beliebige RSSI-Ermittlungsverfahren im ID-Geber eingesetzt werden. Vorteilhaft für die Entfernungsbestimmung ist es grundsätzlich, wenn das Wecksignal in einem niederfrequenten Bereich ausgestrahlt wird, z.B. bei 125 kHz.

In einer bevorzugten Gestaltung ist die Sendespule für Wecksignale zur Aussendung eines niederfrequenten Signals ansteuerbar, z.B. die genannten 125 kHz und die bidirektionale Funkkommunikation zwischen ID-Geber und Steuersystem findet im Hochfrequenzbereich, bei einigen 100 mHz statt.

Der Austausch von Informationen im Hochfrequenzbereich hat sich bei Zugriffssystemen für Kraftfahrzeuge bewährt und erlaubt eine rasche und problemlose Kommunikation. Andererseits erlaubt die niederfrequente Aussendung von Wecksignalen einerseits die räumliche Begrenzung von den Signalen, was die Sicherheit weiter erhöht, und andererseits die Verwendung bewährter Transpondersysteme in den ID-Gebern.

Gemäß der beanspruchten Weiterbildung der Erfindung ist der Annäherungssensor ein kapazitiver Sensor. Derartige Sensoren werden in Türgriffen von Kraftfahrzeugen seit längerem eingesetzt und erfassen die Änderung des Dielektrikums im Erfassungsbereich des Sensors. Wird ein Körperteil des Bedieners, z.B. dessen Hand in diesen Erfassungsbereich gebracht, so wird diese Veränderung des Dielektrikums zu einer Ladungsverschiebung einer detektierbaren Sensorantwort führen.

Eine Annäherungssensor, der zum Einsatz in der Erfindung geeignet ist, ist z.B. aus der Patentanmeldung DE 10 2004 019 571 bekannt. Bei der in dieser Patentanmeldung beschriebene Vorrichtung sind in einem Türgriff kapazitive Sensoren untergebracht, die auf eine Annäherung eines Bedienerkörperteils, insbesondere einer Hand, ansprechen. Die kapazitiven Sensoren umfassen jeweils eine Elektrode in Form einer Metallfläche oder Metallplatte, eine mit der Elektrode gekoppelte Speise- und Auswerteschaltung und - als Referenzelektrode - eine Kopplung mit der Masse des Kraftfahrzeugs. Es sind eine Vielzahl unterschiedlichster Speise- und Auswerteschaltungen für den kapazitiven Sensor denkbar. Beispielsweise kann die aus der Elektrode und der Referenzmasse gebildete Kapazität mit einer Gleichspannung oder einer hochfrequenten Wechselspannung gespeist werden. Die jeweils vorhandene Kapazität (oder - bei Wechselspannung - Impedanz) bzw. deren Änderung wird von der Auswerteschaltung erfasst. Änderungen der Kapazität ergeben sich beispielsweise durch die Annäherung der Hand eines Bedieners an die Elektrode. Diese Änderungen der Kapazität resultieren aus den Änderungen des elektrischen Feldes, welches sich zwischen der Elektrode und der Masse ausbildet. Grundsätzlich führt die Annäherung eines Bedienerkörperteils an die Elektrode zu einer Erhöhung der Kapazität. Diese Kapazitätserhöhung wird beispielsweise mit Hilfe eines Komparators ermittelt, der einen für die Kapazität repräsentativen Spannungs- oder Stromwert innerhalb der Auswerteschaltung mit einem Schwellwert vergleicht und in Abhängigkeit von dem Vergleich ein Ausgabesignal erzeugt.

Die Anordnung eines derartigen Sensors im Bereich der Ladesteckdose ist bei elektrisch betriebenen Fahrzeugen problemlos möglich, insbesondere da keine Bedenken hinsichtlich der Stromführung in diesen Bereichen bestehen, wie das teilweise bei flüssigbrennstoffbetriebenen Fahrzeugen der Fall war.

In einer weiteren Ausgestaltung der Erfindung ist die Abdeckung des Systems schwenkbar ausgebildet, wobei ein in oder an der Abdeckung angeordneter Annäherungssensor mitgeschwenkt wird, so dass der je nach Schwenkstellung der Abdeckung einen unterschiedlichen Erfassungsbereich aufweist.

Die Anordnung des Annäherungssensors an oder in der Abdeckung erlaubt eine ideale Detektion in dem Zugriffsbereich, da die Hand des Benutzers zwangsläufig zu der Abdeckung geführt wird, um diese zu betätigen. Wird die Abdeckung aufgeschwenkt, z.B. wie ein herkömmlicher Tankdeckel, kann der Annäherungssensor in dieser Stellung und bei geeigneter Anordnung an der Klappe einen geänderten Erfassungsbereich aufweisen. Beispielsweise kann dann, bei einer geöffneten Stellung der Abdeckung der Bereich detektiert werden, der im Zugriff auf den eingesteckten Ladestecker durchgriffen wird. Alternativ können in der Abdeckung auch mehrere Annäherungssensoren ausgebildet sein, z.B. für die Detektion des Außenbereichs in der Schließstellung und des Bereichs zum Hintergreifen der Abdeckung in der geöffneten Stellung.

Diese Funktionalität wird insbesondere dann relevant, wenn auch die Berechtigung zur Entnahme eines eingeführten Steckers überprüft werden soll.

In einer Weiterbildung der Erfindung ist nämlich eine Ladestecker-Verriegelungsvorrichtung ausgebildet, die ebenfalls mit dem Steuersystem des Kraftfahrzeuges gekoppelt ist. Mit Hilfe dieser Verriegelungsvorrichtung kann ein Ladestecker im eingesteckten Zustand in die Ladesteckdose arretiert werden und gegen Entnahme gesichert werden. Das Steuersystem kann die Verriegelung des eingesteckten Ladesteckers aufheben oder aufrechterhalten, wobei erneut das erfindungsgemäße System zur Authentifizierung eines berechtigten Zugriffs zum Einsatz kommt.

Zur Verriegelung des eingesteckten Ladesteckers kann dabei eine Technik zum Einsatz kommen, die auch bei der Verriegelung von Tankdeckeln in Fahrzeugen mit Flüssigtreibstoff bekannt sind. So wird ein Sperrstift in Eingriff mit einer Ausnehmung an dem Stecker gebracht, um diesen gegen Entnahme zu sperren.

Befindet sich ein Ladestecker in eingesteckter und verriegelter Position in der Ladesteckdose, und detektiert ein Annäherungssensor einen Zugriff eines Benutzers auf den Ladestecker, so wird der vorgehend beschriebene Vorgang in Gang gesetzt. Zunächst wird ein Wecksignal an einen ID-Geber ausgegeben, und im Falle eines erfolgreichen Weckvorgangs ein bidirektionaler Kommunikationsvorgang zwischen Fahrzeugsteuereinrichtung und ID-Geber eingeleitet. Wird erfasst, dass ein berechtigter Benutzer sich um den Zugriff auf den Ladestecker bemüht, wird die Verriegelung des Ladesteckers aufgehoben und die Entfernung des Ladesteckers aus der eingeführten Stellung erlaubt.

Die dazu erforderlichen Bauteile können dieselben Bauteile sein, die auch für die Zugriffskontrolle auf die Abdeckung verwendet werden. Insbesondere können derselbe Annäherungssensor und dieselbe Sendespule für Wecksignale verwendet werden. Alternativ können jedoch auch für beide Zwecke andere Sensoren und Sendespulen vorgesehen sein.

Die Erfindung wird nun anhand der beiliegenden Figuren näher erläutert.
Figur 1 zeigt in schematischer Weise den Vorgang der Zugriffskontrolle beim Zugriff auf eine verriegelte Ladesteckdose an einem Kraftfahrzeug;
Figur 2 zeigt in schematischer Weise den Kontrollvorgang beim Zugriff auf einen eingesteckten Ladestecker an einem Kraftfahrzeug;
Figur 3 zeigt in schematischer Weise den Kontrollvorgang beim Zugriff auf eine Ladesteckdose an einer Ladestation.

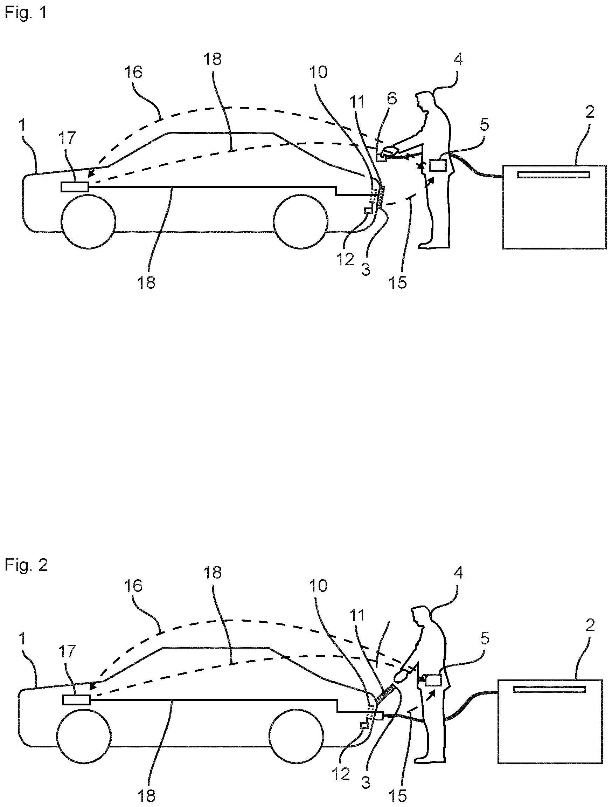

Gemäß Figur 1 befindet sich ein Kraftfahrzeug 1 in der Nähe einer Stromversorgungseinrichtung 2. Das Kraftfahrzeug weist eine Abdeckung 3 für eine hinter der Abdeckung kraftfahrzeugseitig geschützte Ladesteckdose (nicht gezeigt) auf. In Fig. 1 ist die Ladeklappe 3 in einem gegen den Zugriff verriegelten Zustand, im Übrigen können die Türen des Kraftfahrzeuges verriegelt oder entriegelt sein. Ein Benutzer 4 will auf die Ladeklappe 3 zugreifen. Der Benutzer 4 führt einen ID-Geber 5 mit sich und handhabt einen mit der Ladeeinrichtung 2 über Leitungsmittel verbundenen Ladestecker 6.

In dem Fahrzeug 1 ist im Bereich der Ladeklappe 3 eine Sendespule 10 angeordnet, welche zum Aussenden von Signalen im niederfrequenten Bereich, z.B. bei 125 kHz ausgebildet ist. Außerdem ist die Ladeklappe 3 in ihrem Innern mit einem kapazitiven Annäherungssensor 11 ausgestattet, welcher einen Erfassungsbereich in der nahen Umgebung von einigen 10 cm um die Ladeklappe aufweist. Nähert sich der Benutzer 4 der Ladeklappe 3 an, so registriert dies der kapazitive Annäherungssensor 11 in der Ladeklappe 3 und liefert ein Sensorsignal an eine kraftfahrzeugseitige Untersteuereinheit 12. Diese veranlasst die Sendespule 10 ein LF-Wecksignal 15 auszusenden, welches den ID-Geber 5 erreicht und diesen aus einem Bereitschaftsmodus in einem aktiven Modus versetzt. Der ID-Geber 5 sendet daraufhin per Hochfrequenz ein Signal 16 aus, welches von einer kraftfahrzeugseitigen Steuereinrichtung 17 mit zugehörigen Empfangsmitteln empfangen wird. Die Steuereinrichtung 17 antwortet mit einem Signal 18, wobei zwischen dem ID-Geber 5 und der fahrzeugseitigen Steuereinrichtung 17 eine bidirektionale Kommunikation (16, 18) abgewickelt wird. Dieser Dialog ist ein Authentifizierungsdialog zur Überprüfung der Legitimation zum Zugriff auf die Klappe 3 des Kraftfahrzeugs. Der entsprechende Dialog kann einige oder sämtliche Elemente bekannter Keyless-Entry-Abfragesysteme aufweisen. Findet im Abschluss des Dialoges eine positive Überprüfung der Legitimation statt, so steuert die Steuereinrichtung 17 über eine Steuerleitung 18 einen Entriegelungsmechanismus für die Abdeckung 3 der Ladesteckdose an, so dass der Benutzer diese öffnen kann, sofern dies nicht durch einen fahrzeugseitigen Antrieb geschieht. Da der gesamte Abfragedialog rasch abläuft, nimmt der Benutzer 4, welcher einen zugriffsberechtigten ID-Geber 5 mit sich führt, keine Verzögerung beim Zugriff auf die Abdeckung 3 wahr.

Der Benutzer 4 steckt den Ladestecker 6 in die fahrzeugseitige Ladesteckdose und kann sich daraufhin vom Fahrzeug entfernen.

In diesem Ausführungsbeispiel ist es vorgesehen, dass fahrzeugseitig eine Verriegelung des Steckers 6 nach Einstecken in die Ladesteckdose des Fahrzeugs 1 möglich ist. Diese Verriegelung findet statt, sobald der Stecker 6 ordnungsgemäß bis zum Einschlag eingeschoben wurde. Alternativ kann die Verriegelung stattfinden, wenn sich der Benutzer 4 mit ID-Geber 5 vom Kraftfahrzeug entfernt.

In Figur 2 ist die Situation dargestellt, dass der Benutzer 4 den Ladevorgang an seinem Kraftfahrzeug beenden möchte und den Stecker 6 aus der Ladesteckdose entfernen will. Wiederum detektiert der Annäherungssensor in der Abdeckungsklappe 3 die Annäherung des Benutzers 4, veranlasst die Untersteuereinrichtung 11, ein LF-Wecksignal über die Sendespule 10 auszusenden und der ID-Geber 5 initiiert einen Authentifizierungsdialog mit der Einrichtung 17. Verläuft die Authentifizierung positiv, so steuert die Einrichtung 17 die Verriegelung des Steckers 6 an und gibt diesen zum Abziehen frei oder wirft diesen mit einem elektromotorischen Antrieb aus, wobei letzteres zum Beispiel durch den Benutzer und einen Tastendruck des Benutzers auslösbar ist.

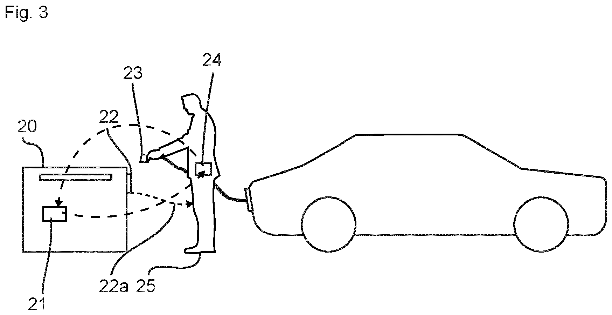

In gleichartiger Weise läuft die Zugriffsprüfung auf eine ortsfeste Ladestation ab, dies ist in der Figur 3 gezeigt.

Eine ortsfeste Ladestation 20 ist mit einer Steuereinrichtung 21 und einer verriegelbaren Abdeckung 22 für die die Versorgungssteckdose versehen. In der Abdeckung 22 ist ein kapazitiver Annäherungssensor integriert. Dieser detektiert, wie mit dem Pfeil 22a angedeutet, eine Annäherung des Nutzers 25.

Greift der Nutzer 25 auf die Abdeckung 22 der Ladestation zu, wird die Annäherung detektiert, ein Wecksignal unter Ansteuerung der Steuereinrichtung 21 generiert und ein Authentifizierungsdialog zwischen dem ID-Geber 24 und der Steuerinrichtung 21 ausgeführt, welchen der Nutzer 25 mit sich trägt.

Die Ladestation 20 kann dazu eine Kommunikationsfähigkeit mit ID-Gebern aufweisen, welche verschiedenen Herstellern von Fahrzeugen zugeordnet sind. Je nach Überprüfung der technischen Kompatibilität anhand der Schlüsseldaten im ID-Geber kann der Zugriff freigegeben werden. Es ist in diesem Beispiel vorgesehen, dass der ID-Geber 24 Informationen aufweist, welche über das Kopplungssystem des Steckers 23 Auskunft geben. Nur wenn der Stecker 23 zu dem System der Ladestation 20 passt, wird der Zugriff freigegeben.

Außerdem ist eine Ausgabe von berechtigten ID-Gebern zu einer Reihe von Ladestationen möglich. Ein Stromversorger kann so nach Registrierung einen ID-Geber mit Kenndaten ausgeben, so dass auch sofort eine entsprechende Zuordnung zu einem Abnehmer und ggf. eine Abrechnung stattfinden kann (ähnlich einer Tankkarte).

## Patentansprüche

1. System zur Zugriffskontrolle auf eine Ladesteckdose für Fahrzeuge, wobei die an einem Kraftfahrzeug (1) oder einer ortsfesten Ladestation (20) angebrachte Ladesteckdose eine verriegelbare Abdeckung (3, 22) aufweist, **dadurch gekennzeichnet**, die verriegelbare Abdeckung eine Abdeckungsklappe ist, dass im Bereich der Ladesteckdose, benachbart zu der Steckeraufnahme oder unmittelbar an dieser Steckeraufnahme oder im Bereich von umliegenden Bauteilen, welche eine Detektion nahe der Steckdose erlauben, ein kapazitiver Annäherungssensor (11) angeordnet ist, welcher die Annäherung eines Körperteils von einem Bediener (25) erfasst, wobei sich der Körperteil der Ladesteckdose nähert, in dem der Bediener (25) seine Hand zur Ladesteckdose ausstreckt, dass der Annäherungssensor (11) mit einem fahrzeugseitigen bzw. ladestationsseitigen Steuersystem (17, 21) gekoppelt ist, wobei mit dem fahrzeugseitigen bzw. ladestationsseitigen Steuersystem (17, 21) wenigstens eine im Bereich und nahe der Ladesteckdose sich befindende Sendespule (10) für elektromagnetische Wecksignale gekoppelt ist, wobei das fahrzeugseitige bzw. ladestationsseitige Steuersystem (17, 21) zur Ansteuerung der Sendespule (10) zur Aussendung eines Wecksignals in Reaktion auf die Erfassung einer Annäherung eines Körperteils von einem seine Hand zur Ladestation ausstreckenden Bedieners (25) durch den Annäherungssensor (11) ausgebildet ist, dass ein vom Kraftfahrzeug (1) oder von der ortsfesten Ladestation (20) separater ID-Geber (5) zum Empfang der Wecksignale ausgebildet ist, wobei der vom Kraftfahrzeug (1) oder von der ortsfesten Ladestation (20) separate ID-Geber (5) und das fahrzeugseitige bzw. ladestationsseitige Steuersystem (17, 21) jeweils Mittel zum Ausführen einer bidirektionalen Funkkommunikation zur Authentifizierung des vom Kraftfahrzeug (1) oder von der ortsfesten Ladestation (20) separaten ID-Gebers (5) aufweisen,
dass das fahrzeugseitige bzw. ladestationsseitige Steuersystem (17, 21) die Abdeckung (3, 22) in Reaktion auf eine erfolgreiche Authentifizierung des berechtigten Zugriffs des Bedieners (25) an die Ladesteckdose entriegelt.

2. System zur Zugriffskontrolle auf eine Ladesteckdose für Fahrzeuge nach Anspruch 1, wobei die Ladesteckdose an einem Kraftfahrzeug (1) angeordnet ist und das fahrzeugseitige bzw. ladestationsseitige Steuersystem (17, 21) ein fahrzeugseitiges Steuersystem (17) ist und der vom Kraftfahrzeug (1) oder von der ortsfesten Ladestation (20) separate ID-Geber (5) ein vom Kraftfahrzeug (1) separater ID-Geber (5) ist.

3. System zur Zugriffskontrolle auf eine Ladesteckdose für Fahrzeuge nach Anspruch 1, wobei die Ladesteckdose an einer ortsfesten Ladestation (20) angeordnet ist und das fahrzeugseitige bzw. ladestationsseitige Steuersystem (17, 21) ein Steuersystem (21) der ortsfesten Ladestation (20) ist und der vom Kraftfahrzeug (1) oder von der ortsfesten Ladestation (20) separate ID-Geber (5) ein von der ortsfesten Ladestation (20) separater ID-Geber (5) ist.

4. System zur Zugriffskontrolle auf eine Ladesteckdose für Fahrzeuge nach einem der Ansprüche 1 bis 3, wobei die Sendespule (10) für Wecksignale in oder an der Abdeckung (3, 22) der Ladesteckdose angeordnet ist.

5. System zur Zugriffskontrolle auf eine Ladesteckdose für Fahrzeuge nach Anspruch 4, wobei der vom Kraftfahrzeug (1) oder von der ortsfesten Ladestation (20) separate ID-Geber (5) Mittel zur Signalstärkebestimmung von empfangenen Signalen der Sendespule (10) für Wecksignale aufweist, wobei der vom Kraftfahrzeug (1) oder von der ortsfesten Ladestation (20) separate ID-Geber (5) zur Übermittlung der ermittelten Signalstärken in der bidirektionalen Funkkommunikation an das fahrzeugseitige bzw. ladestationsseitige Steuersystem (17, 21) ausgebildet ist.

6. System zur Zugriffskontrolle auf eine Ladesteckdose für Fahrzeuge nach einem der vorstehenden Ansprüche, wobei die Sendespule (10) für Wecksignale zur Aussendung eines niederfrequenten Signals ansteuerbar ist und wobei die Mittel zum Ausführen einer bidirektionalen Funkkommunikation des vom Kraftfahrzeug (1) oder von der ortsfesten Ladestation (20) separaten ID-Gebers (5) und des fahrzeugseitigen bzw. ladestationsseitigen Steuersystems (17, 21) zur Aussendung und zum Empfang hochfrequenter Signale ausgebildet sind.

7. System zur Zugriffskontrolle auf eine Ladesteckdose für Fahrzeuge nach einem der vorstehenden Ansprüche, wobei der Annäherungssensor (11) als kapazitiver Sensor eine Elektrode in Form einer Metallfläche oder Metallplatte, eine mit der Elektrode gekoppelte Speise- oder Auswerteschaltung und als Referenzelektrode eine Kopplung mit der Masse des Kraftfahrzeugs (1) umfasst.

8. System zur Zugriffskontrolle auf eine Ladesteckdose für Fahrzeuge nach einem der vorstehenden Ansprüche, wobei der Annäherungssensor (11) in oder an der Abdeckung (3, 22) der Ladesteckdose angeordnet ist.

9. System zur Zugriffskontrolle auf eine Ladesteckdose für Fahrzeuge nach Anspruch 6, wobei die Abdeckung schwenkbar ausgebildet ist, so dass der in der Abdeckung (3, 22) angeordnete Annäherungssensor (11) in Abhängigkeit von der Schwenkstellung der Abdeckung (3, 22) unterschiedliche Erfassungsbereiche aufweist.

10. System zur Zugriffskontrolle auf eine Ladesteckdose für Fahrzeuge nach einem der vorstehenden Ansprüche, wobei eine ansteuerbare Ladestecker-Verriegelungsvorrichtung vorgesehen ist, welche mit dem fahrzeugseitigen bzw. ladestationsseitigen Steuersystem (17, 21) derart gekoppelt ist, dass mit Hilfe einer Ansteuerung des fahrzeugseitigen bzw. ladestationsseitigen Steuersystems (17, 21) ein in die Ladesteckdose eingesteckter Ladestecker (6, 23) in seiner Stellung verriegelbar oder freigebbar ist.

11. Verfahren zum Sperren und Freigeben des Zugriffs auf eine Ladesteckdose für Fahrzeuge, umfassend das System zur Zugriffskontrolle auf eine Ladesteckdose für Fahrzeuge nach Ansprüchen 1 bis 10, weiterhin aufweisend die Schritte:
Erfassen einer Annäherung eines Körperteils eines Bedieners (25) an die Ladesteckdose, wobei sich der Körperteil der Ladesteckdose nähert, in dem der Bediener (25) seine Hand zur Ladesteckdose ausstreckt, wobei die Ladesteckdose an einem Kraftfahrzeug (1) oder einer ortsfesten Ladestation (20) angeordnet ist,
Aussenden eines Wecksignals mit Hilfe einer Sendeeinrichtung (10), Empfangen des Wecksignals mit einem vom Bediener (25) mitgeführten vom Kraftfahrzeug (1) oder von der ortsfesten Ladestation (20) separaten ID-Geber (5), Abwickeln eines Authentifizierungsdialoges zwischen dem vom Kraftfahrzeug (1) oder von der ortsfesten Ladestation (20) separaten ID-Geber (5) und einer fahrzeugseitigen bzw. ladestationsseitigen Steuereinrichtung (17, 21), wobei die fahrzeugseitige bzw. ladestationsseitige Steuereinrichtung (17, 21) an dem Kraftfahrzeug (1) bzw. der ortfesten Ladestation (20) angeordnet ist,
Freigeben oder Sperren des Zugriffs auf die Ladesteckdose in Abhängigkeit von dem Ergebnis des Authentifizierungsdialogs.

12. Verfahren zum Sperren und Freigeben des Zugriffs auf einen Ladestecker (6, 23), welcher in eine Ladesteckdose an einem Kraftfahrzeug (1) oder einer ortsfesten Ladestation (20) eingesteckt und in dieser Stellung verriegelt ist, umfassend das System zur Zugriffskontrolle auf eine Ladesteckdose für Fahrzeuge nach Ansprüchen 1 bis 10, weiterhin aufweisend die Schritte:
Erfassen einer Annäherung eines Körperteils von einem Bediener (25) an die Ladesteckdose mit dem eingesteckten Ladestecker, wobei sich der Körperteil der Ladesteckdose nähert, in dem der Bediener (25) seine Hand zur Ladesteckdose ausstreckt, Aussenden eines Wecksignals mit Hilfe einer am Kraftfahrzeug (1) oder der ortsfesten Ladestation (20) angeordneten Sendeeinrichtung (10), Empfangen des Wecksignals mit einem vom Bediener (25) mitgeführten vom Kraftfahrzeug (1) oder von der ortsfesten Ladestation (20) separaten ID-Geber (5), Abwickeln eines Authentifizierungsdialoges zwischen dem vom Kraftfahrzeug (1) oder von der ortsfesten Ladestation (20) separaten ID-Geber (5) und einer am Kraftfahrzeug (1) bzw. der ortsfesten Ladestation (20) angeordneten fahrzeugseitigen bzw. ladestationsseitigen Steuereinrichtung (17, 21), Freigeben oder Sperren des Zugriffs auf den Ladestecker (6, 23) in Abhängigkeit von dem Ergebnis des Authentifizierungsdialogs.

## Claims

1. A system for controlling access to a charging socket for vehicles, wherein the charging socket, mounted on a motor vehicle (1) or on a stationary charging station (20), has a lockable cover (3, 22),
**characterized in that**
the lockable cover is a cover flap,
that in the region of the charging socket, adjacent to the connector holder, adjacent to the connector holder or directly on this connector holder or in the region of surrounding components, which permit a detection close to the socket, a capacitive proximity sensor (11) is arranged, which detects the approach of a body part of an operator (25),
wherein the body part approaches the charging socket, in which the operator (25) extends his hand to the charging socket,
that the proximity sensor (11) is coupled to a control system (17, 21) on the vehicle side or respectively on the charging station side, wherein at least one transmitting coil (10) for electromagnetic wake-up signals, situated in the region of and close to the charging socket, is coupled to the control system (17, 21) on the vehicle side or respectively on the charging station side,
wherein the control system (17, 21) on the vehicle side or respectively on the charging station side is designed to control the transmitting coil (10) in order to transmit a wake-up signal in reaction to the detection of an approach of a body part of an operator (25) extending his hand to the charging station by the proximity sensor (11),
that an ID transmitter (5), separate from the motor vehicle (1) or from the stationary charging station (20), is designed to receive the wake-up signals, wherein the ID transmitter (5), separate from the motor vehicle (1) or from the stationary charging station (20), and the control system (17, 21) on the vehicle side or respectively on the charging station side have respectively means for carrying out a bidirectional wireless communication in order to authenticate the ID transmitter (5), separate from the motor vehicle (1) or from the stationary charging station (20),
that the control system (17, 21) on the vehicle side or respectively on the charging station side unlocks the cover (3, 22) in reaction to a successful authentication of the authorized access of the operator (25) to the charging socket.

2. The system for controlling access to a charging socket for vehicles according to Claim 1,
wherein the charging socket is arranged on a motor vehicle (1) and the control system (17, 21) on the vehicle side or respectively on the charging station side is a control system (17) on the vehicle side and the ID transmitter (5), separate from the motor vehicle (1) or from the stationary charging station (20), is an ID transmitter (5) separate from the motor vehicle (1).

3. The system for controlling access to a charging socket for vehicles according to Claim 1,
wherein the charging socket is arranged on a stationary charging station (20) and the control system (17, 21) on the vehicle side or respectively on the charging station side is a control system (21) of the stationary charging station (20), and the ID transmitter (5), separate from the motor vehicle (1) or from the stationary charging station (20), is an ID transmitter (5) separate from the stationary charging station (20).

4. The system for controlling access to a charging socket for vehicles according to one of Claims 1 to 3,
wherein the transmitting coil (10) for wake-up signals is arranged in or on the cover (3, 22).

5. The system for controlling access to a charging socket for vehicles according to Claim 4,
wherein the ID transmitter (5), separate from the motor vehicle (1) or from the stationary charging station (20), has means for determining signal strength of received signals of the transmitting coil (10) for wake-up signals, wherein the ID transmitter (5), separate from the motor vehicle (1) or from the stationary charging station (20), is designed to convey the determined signal intensities in the bidirectional wireless communication to the control system (17, 21) on the vehicle side or respectively on the charging station side.

6. The system for controlling access to a charging socket for vehicles according to one of the preceding claims, wherein the transmitting coil (10) for wake-up signals is able to be controlled for the transmission of a low-frequency signal, and wherein the means for carrying out a bidirectional wireless communication of the ID transmitter (5), separate from the motor vehicle (1) or from the stationary charging station (20), and of the control system (17, 21) on the vehicle side or respectively on the charging station side, are designed to transmit and to receive highfrequency signals.

7. The system for controlling access to a charging socket for vehicles according to one of the preceding claims, wherein the proximity sensor (11) as capacitive sensor comprises an electrode in the form of a metal surface or metal plate, a supply- or evaluation circuit coupled with the electrode, and as reference electrode a coupling with the mass of the motor vehicle (1).

8. The system for controlling access to a charging socket for vehicles according to one of the preceding claims, wherein the proximity sensor (11) is arranged in or on the cover (3, 22) of the charging socket.

9. The system for controlling access to a charging socket for vehicles according to Claim 6,
wherein the cover is designed so as to be pivotable, so that the proximity sensor (11), arranged in the cover (3, 22) has different detection ranges depending on the pivoted position of the cover (3, 22).

10. The system for controlling access to a charging socket for vehicles according to one of the preceding claims, wherein a controllable charging plug locking device is provided, which is coupled with the control system (17, 21), on the vehicle side or respectively on the charging station side, such that by means of a controlling of the control system (17, 21), on the vehicle side or respectively on the charging station side, a charging plug (6, 23) inserted into the charging socket is able to be locked in its position or released.

11. A method for blocking and releasing the access to a charging socket for vehicles, comprising the system for controlling access to a charging socket for vehicles according to Claims 1 to 10, furthermore having the steps:
detecting an approach of a body part of an operator (25) to the charging socket, wherein the body part approaches the charging socket, in which the operator (25) extends his hand to the charging socket,
wherein the charging socket is arranged on a motor vehicle (1) or on a stationary charging station (20), transmitting a wake-up signal by means of a transmission device (10),
receiving the wake-up signal with an ID transmitter (5) carried by the operator (25), separate from the motor vehicle (1) or from the stationary charging station (20),
carrying out an authentication dialogue between the ID transmitter (5), separate form the motor vehicle (1) or from the stationary charging station (20), and a control device (17, 21) on the vehicle side or respectively on the charging station side, wherein the control device (17, 21) on the vehicle side or respectively on the charging station side is arranged on the motor vehicle (1) or respectively on the stationary charging station (20),
releasing or blocking the access to the charging socket depending on the result of the authentication dialogue.

12. The method for blocking and releasing the access to a charging plug (6, 23), which is inserted into a charging socket on a motor vehicle (1) or a stationary charging station (20) and is locked in this position, comprising the system for controlling access to a charging socket for vehicles according to Claims 1 to 10, furthermore having the steps:
detecting an approach of a body part of an operator (25) to the charging socket with the inserted charging plug,
wherein the body part approaches the charging socket, in which the operator (25) extends his hand to the charging socket,
transmitting a wake-up signal by means of a transmission device (10) arranged on the motor vehicle (1) or on the stationary charging station (20),
receiving of the wake-up signal with an ID transmitter (5) carried by the operator (25), separate from the motor vehicle (1) or from the stationary charging station (20),
carrying out of an authentication dialogue between the ID transmitter (5), separate from the motor vehicle (1) or from the stationary charging station (20), and a control device (17, 21) on the vehicle side or respectively on the charging station side, arranged on the motor vehicle (1) or respectively on the stationary charging station (20),
releasing or blocking of the access to the charging plug (6, 23) depending on the result of the authentication dialogue.

## Revendications

1. Système de contrôle d'accès à une prise électrique de recharge pour des véhicules,
la prise électrique de recharge montée sur un véhicule automobile (1) ou sur un poste de recharge (20) stationnaire comportant un couvercle (3, 22) verrouillable,
**caractérisé en ce que** le couvercle verrouillable est un clapet de recouvrement,
**en ce que** dans la région de la prise électrique de recharge, au voisinage du logement du connecteur ou directement sur ledit logement du connecteur ou dans la région de composants environnants, lesquels permettent une détection à proximité de la prise électrique est placé un capteur de présence (11) capacitif, lequel détecte la présence d'une partie du corps d'un utilisateur (25), la partie du corps s'approchant de la prise électrique de recharge **en ce que** l'utilisateur (25) tend sa main vers la prise électrique de recharge, **en ce que** le capteur de présence (11) est couplé avec un système de commande (17, 21), situé sur le véhicule ou sur le poste de recharge, avec le système de commande (17, 21) situé sur le véhicule ou sur le poste de recharge étant couplée au moins une bobine émettrice (10) située dans la région et à proximité de la prise électrique de recharge pour des signaux électromagnétiques de réveil, le système de commande (17, 21), situé sur le véhicule ou sur le poste de recharge étant conçu pour amorcer la bobine émettrice (10) pour l'émission d'un signal de réveil en réaction à la détection par le détecteur de présence (11) de la présence d'une partie du corps d'un utilisateur (25) tendant sa main vers le poste de recharge,
**en ce qu'**un transmetteur d'ID (5) séparé du véhicule automobile (1) ou du poste de recharge (20) stationnaire est conçu pour réceptionner les signaux de réveil, le transmetteur d'ID (5) séparé du véhicule automobile (1) ou du poste de recharge (20) stationnaire et le système de commande (17, 21) situé dans le véhicule ou sur le poste de recharge comportant chacun des moyens destinés à réaliser une communication radio bidirectionnelle pour authentifier le transmetteur d'ID (5) séparé du véhicule automobile (1) ou du poste de recharge (20) stationnaire,
**en ce que** le système de commande (17, 21), situé sur le véhicule ou sur le poste de recharge déverrouille le couvercle (3, 22), en réaction à une authentification réussie de l'accès autorisé de l'utilisateur (25) à la prise électrique de recharge.

2. Système de contrôle d'accès à une prise électrique de recharge pour des véhicules selon la revendication 1, la prise électrique de recharge étant placée sur un véhicule automobile (1) et le système de commande (17, 21) situé sur le véhicule ou sur le poste de recharge étant un système de commande (17) situé sur le véhicule et le transmetteur d'ID (5) séparé du véhicule automobile (1) ou du poste de recharge (20) stationnaire étant un transmetteur d'ID (5) séparé du véhicule automobile (1).

3. Système de contrôle d'accès à une prise électrique de recharge pour des véhicules selon la revendication 1, la prise électrique de recharge étant placée sur un poste de recharge (20) stationnaire et le système de commande (17, 21) situé sur le véhicule ou sur le poste de recharge étant un système de commande (21) du poste de recharge (20) stationnaire et le transmetteur d'ID (5) séparé du véhicule automobile (1) ou du poste de recharge (20) stationnaire étant un transmetteur d'ID (5) séparé du poste de recharge (20) stationnaire.

4. Système de contrôle d'accès à une prise électrique de recharge pour des véhicules selon l'une quelconque des revendications 1 à 3, la bobine émettrice (10) de signaux de réveil étant placée dans ou sur le couvercle (3, 22) de la prise de courant électrique.

5. Système de contrôle d'accès à une prise électrique de recharge pour des véhicules selon la revendication 4, le transmetteur d'ID (5) séparé du véhicule automobile (1) ou du poste de recharge (20) comportant des moyens pour déterminer la force de signal de signaux réceptionnés de la part de la bobine émettrice (10) de signaux de réveil, le transmetteur d'ID (5) séparé du véhicule automobile (1) ou du poste de recharge (20) étant conçu pour transmettre les forces de signal déterminées dans la communication radio bidirectionnelle au système de commande (17, 21) situé sur le véhicule ou sur le poste de recharge.

6. Système de contrôle d'accès à une prise électrique de recharge pour des véhicules selon l'une quelconque des revendications précédentes, la bobine émettrice (10) de signaux de réveil étant amorçable pour l'émission d'un signal basse fréquence et les moyens de réalisation d'une communication radio bidirectionnelle du transmetteur d'ID (5) séparé du véhicule automobile (1) ou du poste de recharge (20) stationnaire et du système de commande (17, 21) situé sur le véhicule ou situé sur le poste de recharge étant conçus pour émettre et pour réceptionner des signaux haute fréquence.

7. Système de contrôle d'accès à une prise électrique de recharge pour des véhicules selon l'une quelconque des revendications précédentes, en tant que capteur capacitif, le capteur de présence (11) comprenant une électrode sous la forme d'une surface métallique ou d'une plaque métallique, un circuit d'alimentation ou d'évaluation couplé avec l'électrode et en tant qu'électrode de référence, un couplage avec la masse du véhicule automobile (1).

8. Système de contrôle d'accès à une prise électrique de recharge pour des véhicules selon l'une quelconque des revendications précédentes, le capteur de présence (11) étant placé sur ou dans le couvercle (3, 22) de la prise électrique de recharge.

9. Système de contrôle d'accès à une prise électrique de recharge pour des véhicules selon la revendication 6, le couvercle étant conçu de manière pivotante, de sorte que le capteur de présence (11) placé dans le couvercle (3, 22) comporte différentes régions de détection, en fonction de la position en pivotement du couvercle (3, 22) .

10. Système de contrôle d'accès à une prise électrique de recharge pour des véhicules selon l'une quelconque des revendications précédentes, un dispositif de verrouillage de la prise électrique de recharge étant prévue, lequel est couplé avec le système de commande (17, 21) situé dans le véhicule ou situé dans le poste de recharge de telle sorte qu'à l'aide d'un amorçage du système de commande (17, 21) situé dans le véhicule ou situé dans le poste de recharge, un connecteur de recharge (6, 23) enfichable dans la prise électrique de recharge puisse être verrouillé dans sa position ou libéré.

11. Procédé destiné à bloquer ou à libérer l'accès à une prise électrique de recharge pour des véhicules, comprenant le système de contrôle d'accès à une prise électrique de recharge pour véhicules selon les revendications 1 à 10, comportant par ailleurs les étapes :
de la détection d'une présence d'une partie du corps d'un utilisateur (25) à l'approche de la prise électrique de recharge, la partie du corps s'approchant de la prise électrique de recharge en ce que l'utilisateur (25) tend sa main vers la prise électrique de recharge, la prise électrique de recharge étant placée sur un véhicule automobile (1) ou sur une poste de recharge (20) stationnaire,
de l'émission d'un signal de réveil à l'aide d'un système émetteur (10),
de la réception du signal de réveil avec un transmetteur d'ID (5) embarqué par l'utilisateur (25), séparé du véhicule automobile (1) ou du poste de recharge (20) stationnaire,
de l'exécution d'un dialogue d'authentification entre le transmetteur d'ID (5) séparé du véhicule automobile (1) ou du poste de recharge (20) stationnaire et un système de commande (17, 21) situé sur le véhicule ou sur la station de recharge, le système de commande (17, 21) situé sur le véhicule ou sur la station de recharge étant placé sur le véhicule automobile (1) ou sur le poste de recharge (20) stationnaire,
de la libération ou du blocage de l'accès à la prise électrique de recharge, en fonction du résultat du dialogue d'authentification.

12. Procédé destiné à bloquer ou à libérer l'accès à un connecteur de recharge (6, 23), lequel est enfiché dans une prise électrique de recharge sur un véhicule automobile (1) ou sur un poste de recharge (20) stationnaire et verrouillé dans ladite position, comprenant le système de contrôle d'accès à une prise électrique de recharge pour véhicules selon les revendications 1 à 10, comportant par ailleurs les étapes :
de la détection d'une présence d'une partie du corps d'un utilisateur (25) à l'approche de la prise électrique de recharge avec le connecteur de recharge enfiché, la partie du corps s'approchant de la prise électrique de recharge en ce que l'utilisateur (25) tend sa main vers la prise électrique de recharge,
de l'émission d'un signal de réveil à l'aide d'un système émetteur (10) placé sur le véhicule automobile (1) ou sur le poste de recharge (20) stationnaire,
de la réception du signal de réveil avec un transmetteur d'ID (5) embarqué par l'utilisateur (25), séparé du véhicule automobile (1) ou du poste de recharge (20) stationnaire,
de l'exécution d'un dialogue d'authentification entre le transmetteur d'ID (5) séparé du véhicule automobile (1) ou du poste de recharge (20) stationnaire et d'un système de commande (17, 21) côté véhicule ou côté poste de recharge, placé sur le véhicule automobile (1) ou sur le poste de recharge (20) stationnaire,
de la libération ou du blocage de l'accès au connecteur de recharge (6, 23), en fonction du résultat du dialogue d'authentification.
